# EUROPEAN PATENT APPLICATION

(11) **EP 1 209 862 A1**
(43) Date of publication of application: **29.05.2002**
(21) Application number: 00310344.7
(22) Date of filing: 22.11.2000
(51) Int. Cl.: H04L 12/56

(54) **Method of linking two schedulers of a multi-layer network and a network comprising a transceiver having linking functionality for two schedulers**

(71) Applicant: LUCENT TECHNOLOGIES INC., Murray Hill, New Jersey 07974-0636 (US)
(72) Inventor: Gruhl, Stefan, Nurnberg 90443 (DE)
(74) Representative: Buckley, Christopher Simon Thirsk

(57) **Abstract**

The invention addresses the problem of multi-layer scheduling in a packet switched network or system, especially in a mobile telecommunication system. It is an object of the invention to provide a new and improved scheduling approach to allow for very efficient scheduling.
According to the invention it is proposed a packet switched network and a method for providing quality of service in a packet switched network based on at least two hierarchically structured protocol layers with respective schedulers by the steps of providing upper layer protocol data units (PDUs) of an incoming data flow within a priority order of a definable data-flow-queue to be served by the scheduler (MAC-scheduler) of a lower layer for data transmission, selecting a protocol data unit (PDU) on demand of the scheduler (MAC-scheduler) of the lower layer in dependence of the priority order and actual network constraints, and serving the selected protocol data unit by the scheduler (MAC-scheduler) of the lower layer.

## Description

The invention relates in general to a method of scheduling in a multi-layer network or system and to a network or system comprising a transceiver having a such scheduling functionality and specifically to a method of providing quality of service in a packet switched system by linking two hierarchically structured schedulers and to a packet switched system.

The invention mainly addresses the problem of multi-layer scheduling in a packet switched network or system, for example in a mobile telecommunication system. Considering packet-switching networks with the standard ISO/OSI architecture the task of multiplexing essentially reduces the task of ordering packets and then sending them serially over a shared link. This process of serialisation is subsequently referred to as scheduling.

For certain network links, especially for wireless links an certain amount of pre-given link characteristics have to be applied. Such a pre-given link characteristic may be for example a very specific error character of the link. This is traditionally addressed by applying segmentation on the layer-3 Protocol Data Units (PDU's). Then after segmentation the resulting smaller entities are scheduled in a link specific medium access layer. Since, however, scheduling of protocol data units have been already performed on the higher layer there are two subsequent schedulers resulting in numerous disadvantages if these two schedulers are decoupled.

Typically there are several protocol layers on top of each other and each of those layers operate on protocol data units (PDU). Based on the data flow within the ISO/OSI standard layer model for protocols, the output of one layer usually provides the input of the next layer. This model for protocols seems to be beneficial since it allows several functions to be grouped together into dedicated modules. If, however, a protocol function contains scheduling this standard approach is less desirable when the dynamic behaviour of subsequent functions in subsequent layers is not predictable. Moreover for persons skilled in the art it is obvious that it is often impossible or not advisable to restrict the providing of scheduling processes for the whole protocol-stack to only one scheduler.

In general an arbitrary number of individual logical data flows is given forming the bases for providing Quality of Services (QoS) by means of the individual flows, each of which having a set of QoS-attributes associated. According to the document "Service disciplines for guaranteed performance service and packet-switching networks" issued by Hui Zhang in proceedings of the IEEE, volume 83 No. 10, October 1995 scheduling algorithms are proposed to provide bandwidth conserving scheduling disciplines for the flows regardless of the packet arrival patterns of the flows. The algorithms schemes disclosed therein assume that there is exactly one shared output link with static capacity. However this view is not always applicable regarding for example wireless links with multi-slot mobile in General Packet Radio Systems (GPRS) or via a downlink shared channel in Universal Mobile Telecommunication Systems (UMTS).

Thus to address the specific character of the link, there is a lower link layer protocol layer that typically comprises segmentation to transmission blocks. The length of such blocks is not static but varies to allow the usage of different coding schemes that cause to improve the operation at a certain channel condition and an experienced Bit-Error-Rate (BER). Each block receives a header for re-assembly, a Cyclic Redundancy Check (CRC) for error dedication and possibly an Automatic Retransmission Request (ARQ) for backward error correction. A so called MAC-scheduler (medium access control-scheduler provides these blocks for the Physical-layer (PHY-layer). In case of wireless circumstances the link is a shared medium so that the PHY-layer typically allows for several channels. However, typically there are transmission-( or radio-) blocks that can not be scheduled to any of those channels.

It is an object of the invention to provide an improved possibility to overcome the above mentioned restrictions and to allow for very efficient scheduling.

The inventive solution of the object is characterized by a method, a system, a base and a mobile station as well as a implementation software incorporating the features of claim 1, 9, 18, 19 and 20, respectively.

The invention proposes and uses a scheduling decision approach of linking two hierarchically structured schedulers by service processing on demand. By providing by means of the scheduler of an upper layer protocol data units of an incoming data flow within a priority order of a definable data-flow-queue to be served by the scheduler of a lower layer for data transmission, selecting a protocol data unit on demand of the scheduler of the lower layer in dependence of the priority order and actual network constraints, and serving the selected protocol data unit by the scheduler of the lower layer, the scheduler of the upper layer can dynamically change the elements within a definable data-flow-queue but the scheduler of the lower layer decides the further processing order with regard to provided resources that can be filled up with data units of the upper layer.

Thus, the upper scheduler advantageously is apt to read and write in a data-flow-queue and the scheduler of the lower layer is apt to read in the data-flow-queue. The upper scheduler provides a predictable behaviour in that the protocol data units queued in a respective flow have constraints and quality-of-service-attributes associated that can be compared on demand of the lower scheduler with the actual network constraints starting with the protocol data unit having the highest priority within a respective flow-queue.

For linking the two schedulers the selected data units are delivered to a protocol functionality means for performing data unit operations necessary for data transmission.

Preferably, the invention relates to two serial schedulers of a GPRS-system, i.e. the upper scheduler is operating on the Logical-Link-Control-layer and the scheduler of the lower layer is operating on the Medium-Access-Control-layer so that an implemented intermediate protocol functionality is the Radio-Link-Control-layer.

The invention is described in view of preferred embodiments in more detail below and reference is made to the accompanying drawings.

In the drawing:
- Fig. 1: shows the principal architecture of two serial schedulers with an intermediate protocol functionality according to the invention;
- Fig. 2: shows a black-box interpretations of protocol functionality;
- Fig. 3: shows a referencing model of PDU-input data into an abstract protocol function;
- Fig. 4: shows a general example of a two-scheduler access on a shared queue;
- Fig. 5: shows a regular MAC-service to a PDU; and
- Fig. 6: shows a completion of a MAC-service to a PDU according to Fig. 5.

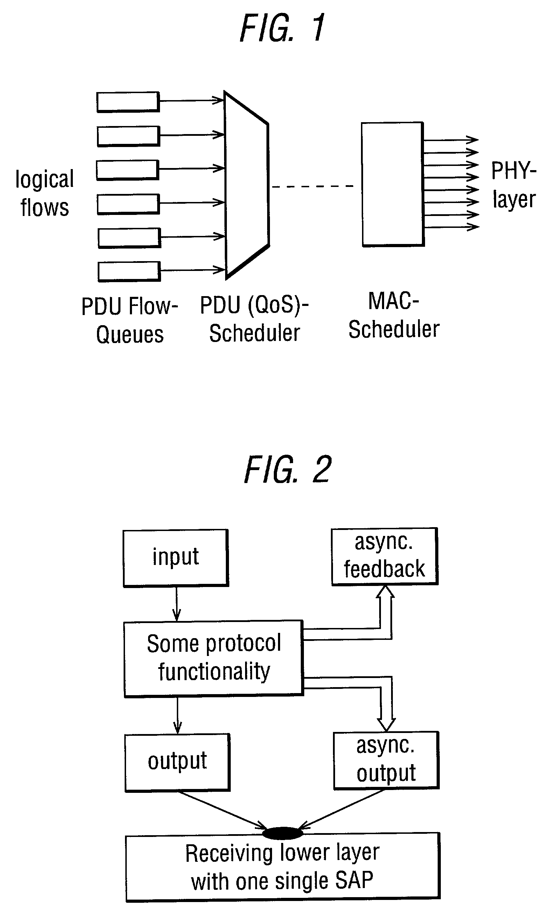

The invention contemplates using of two schedulers, which are linked together in a novel manner to achieve a certain degree of predictable behavior, while also allowing for bandwidth conserving segmentation and scheduling. In the following description, the essential working mechanism of the schedulers are described basing on a network or system having a transceiver unit operating on at least two different protocol layers, i.e. an upper layer and a lower layer each of which having a scheduler. The scheduler in the upper layer operates on any Protocol Data Units PDU's and is called PDU-scheduler. Thus the input of this scheduler are simply called PDU. The output of this upper layer's scheduler is a service list of these PDU's. According to the exemplary embodiment, the lower layer's scheduler is assumed to be the last one in the chain of schedulers. This is for the most protocol applications the MAC-layer and the lower layer's scheduler is therefore referred to as MAC-scheduler for distinguishing reasons as depicted in Fig.1.

However, for a better understanding of the subsequent description of the invention and especially to ensure the improved performance of the inventive architecture, method and devices, certain requirements should be met and a number assumptions are made in advance.

Regarding two schedulers, an intermediate protocol functionality has to be implemented there between. It is assumed that the functionality allows for a view of input and output traffic plus relatively rare asynchronous output. For the following description the protocol functionality only in the direction from a higher to a lower layer is regarded as being necessary. The interpretation of such a protocol functionality is shown in Fig. 2. As can be seen any protocol functionality is assumed to deal wit one input and a plurality of outputs. The output is assumed to have the character of one main output stream that typically is forwarded to a Service Access Point (SAP) of a lower layer. However, an additional asynchronous output may also be provided. Such an asynchronous output may for example result from an Automatic-Retransmission-Request-stage (ARQ-stage) and is sent somewhere else. Thus the asynchronous output may be sent to the former SAP in the case of a retransmission or somewhere else to a higher layer to signal an unsuccessful transmission. However, it is assumed that this asynchronous traffic should be relatively rare and that it is not required to have this output explicitly associated with the input traffic.

The following description specifically considers a system with segmentation and backward error correction functionality and the subsequently described preferred example of embodiment may be implemented in the black-box fashion according to FIG. 2.

The time of computation of such approximated functionality is small enough to allow the execution on demand. Therefore, it is necessary to be able to give an upper bound tₘₐₓ on processing time for the maximum number of possible executions of such on-demand requests. The assumption is given in case the tₘₐₓ is lower than one lower-schedulers scheduling cycle.

It has to be noted that the working with flow time stamps, as argued for example by J.Cobb, M.Gouda and A-EL-Nahas in "Flow timestamps", Annual Joint Conference of Information Sciences and discussed in detail below, eases the estimation of processing time since the upper limit of elements in the service-list of a PDU-scheduler can be limited to the maximum number of flows in the system.

It is assumed that all QoS traffic is embedded into flows. A flow is a sequence of packets travelling from the same source (application) to the same destination application, for example from one local Base Transceiver Station (BTS) to a Mobile Station (MS) or vice versa. For one flow there are QoS-attributes negotiated between the network and the application. A set of constraints which is also associated with the flow, might be within the network to provide such service. The number of flows in the system may be arbitrary but finite.

Throughout the subsequent description the elements of a data flow are referred to as Protocol Data Units (PDU) typically being layer-3 elements. However, since this is not necessary the protocol data units are not limited to these elements.

In the following description the segmented PDU's are called blocks and it is always assumed that the segmentation process automatically attaches the required header and performs CRC and ARQ on it. Thus for the sake of simple description a block is considered ready for transmission once it is created.

Moreover, it is assumed that a higher layer scheduler is called PDU scheduler. This QoS-scheduling is implemented by a rate conserving serving discipline and typically is implemented by assigning service priorities to the packets. Any kind of scheduling algorithm yields an execution order for its processed packets. Thus this order may be interpreted as an ordered list of execution as it is foreseen by the algorithm. Throughout the following description, the assumption of one ordered list is sufficient regardless of the actual serving discipline. This list is referred to as service-list.

Having regard to the principle architecture of Fig. 1, the PDU-scheduler takes the PDU from the incoming data flows. The PDU's of each data flow are queued in an own first input first output (FIFO)-queue per flow denoted as PDU-flow-queue. Each such flow has constraints and the QoS-attributes associated.

The PDU-scheduler targets certain QoS goals, as for example a certain bandwidth as it is usually targeted by rate conserving strategies. Therefore it orders the PDU's in such a way, that each flow receive service not worse than a link with the specified bandwidth. This is referred to as rate/bandwidth conserving scheduling.

A most important goal of such algorithms is to grant each flow access to the shared medium not worse than the required bandwidth and to fairly share unused bandwidth among them. This is only possible if the resource allocation did not allocate flows with more bandwidth requirements than it can be served by the shared link. However, the details on PDU-scheduling is known by persons skilled in the art and thus is not described in detail.

The PDU-scheduler experiences that some of it's scheduled PDU's are getting serviced and after a while are removed from the PDU-flow-queue and from the service-list.

However, since classic schedulers expect that always the first element is getting full service and thus that there is a strict FIFO service manner on it's queue the PDU-scheduler has to be improved according to the invention to be applicable with regard to the MAC-constraints.

With regard to a PDU-scheduler according to the invention, PDU-timestamps or flow-timestamps as disclosed in the aforementioned reference "Flow timestamps", the contents of which is incorporated by reference hereby, could be used. Assigning a timestamp to every PDU by using PDU-timestamps could be performed on PDU arrival resulting in a function's timing associated with each PDU-arrival. As an alternative a timestamp could be assigned to every PDU arriving within a MAC-interval. As shown in the aforementioned and referenced citation "Flow timestamps" it is sufficient to maintain one timestamp per flow, i.e. for the first packet in the queue of each flow. As long as the QoS policy of the system should not account of the inter-arrival patterns of the PDU's the maintaining of one timestamp per flow decreases the effort significantly and has no disadvantages. However this is typically not desired as the flow should be treated with regard to it's flow specification and not it's actual observed dynamical behaviour. Also both schemes can be used within the scope of the invention and for the following description it is assumed that flow-timestamps are used and consequently timing issues for flow-timestamps are designed.

As a consequence two situations where scheduling action is performed could be identified:
a) A PDU from a flow has received full service by lower layers and is thus removed from the service-list and the PDU-flow-queue. The next PDU from this PDU-flow-queue, if available, is then assigned a timestamp and gets ordered into the service-list. Accordingly the timing of the PDU-scheduler is driven by the serving lower layers and if there is no more PDU available from the respective flow, the flow is considered to be inactive.
b) If a new PDU arrives for an empty PDU-flow-queue, this flow becomes active and needs its PDU to be scheduled, i.e. inserted into the ordered service-list. For some scheduling strategies this flow reactivation requires some flow synchronisation to be performed as known by someone skilled in the art. The timing of this event is driven on PDU arrival.

In contrast to the aforementioned PDU-scheduler a MAC-scheduler serves the PDU's from the PDU-scheduler. The order in the PDU-scheduler's queue signals the priority in which the PDU-scheduler wants the PDU's to be served. The MAC-scheduler tries to achieve this priority order while obeying restrictions. The MAC-scheduler takes the PDU's from such a queue successively, performs segmentation into transport blocks, handles the ARQ and delivers the transport blocks for transmission.

The MAC-scheduler according to the invention is activated periodically and for most systems at a fixed MAC-scheduling interval. For GPRS systems such an interval is approximately 20ms and an activating intervals for UMTS-systems is for example nearly every 10ms.

Furthermore, while the PDU-scheduler can read and write in the PDU-queue the MAC-scheduler does only read and implicitly remove the elements in that queue. The reading process is synchronised in such a way that it is assured that any reading access is performed on the queue while the queue is in a valid and consistent state. This could be for example implemented with a semaphore variable. According to the preferred embodiment in a GPRS-System, it is avoided that both schedulers work in an unsynchronised way which also assists to avoid such access conflicts.

Accordingly, the PDU-scheduler operates on the input data e.g. from Layer 3, the Protocol Data Units (PDU). It receives the QoS requirements of each flows and determines the order in which PDU's should receive service. This service is delivered by lower layer protocol functionality and incorporates mainly two steps. The first is Layer-2 protocol related and includes mainly segmentation of PDU to Transport Blocks (TB) and Automatic Repeat Request (ARQ). The MAC-scheduler serves the PDU's from this list and tries to reflect the order in the list, while also taking power constraints into account. The MAC-scheduler is active at every frame, e.g. on a 20 ms base. The PDU scheduler is operated on all active flows, i.e. with a non-empty PDU-flow-queue. To allow for the linking of the two schedulers the intermediate protocol functionality (depicted as cloud in Figure 1) has to allow for a certain implementation as described below.

According to the invention any protocol functionality is defined as operations on data packets. These operations comprise for example an alteration of the packet size, and the content and/or the creation of new packets and are initiated by the arrival from an input source or from another event as for example an interval time out. A method for actively requesting some output can involve the providing of an input and the subsequent waiting for the output or the providing of a clock that triggers internal functionality. However additional asynchronous output may occur as well.

As stated above, the functionality according to the preferred embodiment mainly consists of two processes namely the segmentation and an ARQ. Furthermore additional smaller tasks which are for example the creation of headers or CRC (Cyclic Redundancy Check) creation substantially forming traditional functions on packets that only alter the content of one packet can easily be integrated.

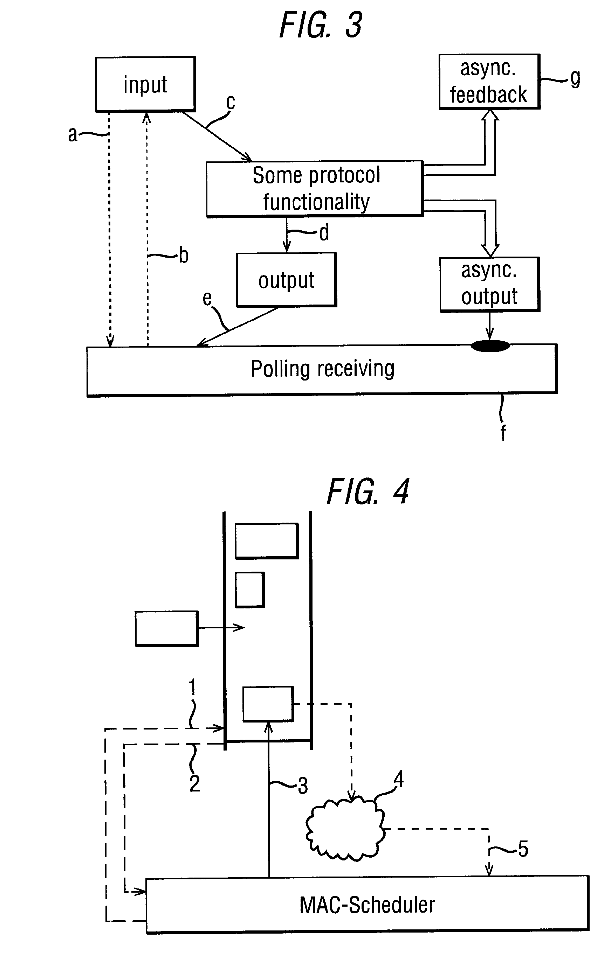

Basing on the aforementioned assumption with regard to Fig. 2 the order of executions of the two schedulers is changed to a scheme of two schedulers forming a poling lower layer and an upper layer which provides the input. Thus, according to the invention a linking of the two schedulers is proposed enabling a delivering of merely such an amount of data that the polling lower layer i.e. for example the MAC-scheduler, wants to process. In other words the scheduler on the lower layer provides resources that will have to be filled by the higher layer(s). The principle scheme of an general inter-layer referencing scheme between a delivering upper layer and a polling receiver on a lower layer regardless of the actual implementation of the polling/delivery mechanism is depicted in Fig. 3. The principle scheme for such inter-layer referencing essentially is the following:
a) In an initial step "a" reference to the input is given to the polling receiver;
b) When the receiver polls for new input it puts out a request to the input via the reference. The input might be an actual PDU, the serving-list or a controlling entity that can match QoS requirements and constraints to some PDU-selection. By some means or other, there will be a decision in favour of a flow or PDU;
c) The input in means of a PDU is delivered to some protocol functionality;
d) This will lead to some output. Preferably the implementation is supporting a mechanism that support that this output is well suited to match into the provided resources from the polling lower layer;
e) This output is then taken by the receiver to fill its resources;
f) In case the such encapsulated protocol functionality could generate asynchronous output which has to be expected by the receiver, the receiver additionally has to provide a separate SAP for such asynchronous output.
g) There should also be an SAP offered by the higher layer to allow the encapsulated protocol functionality to signal to the higher layer. Such a signal for example could be the notification of an unsuccessful attempted delivery

It has to be noted that the handling and inputting of a PDU to the protocol functionality is assumed to be one step. Furthermore, the essential reason for distinguishing the steps of outputting, according to point d) of fig. 3, and of delivering to the polling receiver, according to point e) of fig. 3, is based on the fact that the actual polling can happen on a different time scale and thus to allow for various implementations of this timing aspect. There could be for example one delivery performed and a sequence of poll requests of segmented blocks.

With the given polling of protocol functionality as exemplary depicted in Fig. 3 the both schedulers are linked together. A general example of such a two-scheduler access on a shared queue is depicted in Fig. 4. It is assumed the output of the PDU-scheduler is the service-list of PDU-packets. The PDU-packets are going to receive service by the MAC-layer. A constraint matching device is determining the serviced PDU's on each MAC-serving interval according to Fig. 4 essentially by the following scheme:
1. The MAC-scheduler states its polling request to a constraint matching device having reading access to the service-list. According to preferred embodiments and for the sake of simplicity this device is assumed to be either part of the MAC-scheduler or part of the PDU-scheduler;
2. The matching device checks the PDU's respectively the PDU-flow properties for finding the first PDU in the service-list that shall receive service and comprises constraints allowing for transmission. Since however the exact mechanism of such an device is highly dependent on the network system used and involves the checking of the system specific constraints, as known by persons skilled in the art, it is not described in detail;
3. Once a decision is made which PDU or PDU-flow shall receive service, it is polled as described with regard to Fig. 3.;
4. The output receives the required protocol functionality and is passed to the MAC-scheduler;
5. As described with regard to Fig. 3, the MAC-scheduler provides an extra input for the asynchronous output involving for example a signalling and ARQ retransmission. A preferred implementation is to grant precedence to input at this SAP.

According to a preferred embodiment, as stated above, the inventive approach is incorporated within a packet switched-system having transceiver units operating on a multi-layer model for protocols. Basing on a GPRS-System, the Logical-Link-Control-Layer (LLC-layer) comprises means for performing the PDU-scheduling and accordingly the MAC-layer comprises means for performing the MAC-scheduling. As known, there is a maximum of 8 timeslots in GPRS-systems for each carrier frequency and several carriers are treated independently of each other as there is no multiplexing between carriers possible. Therefore scheduling is restricted to a single carrier system and other carriers are served by own schedulers. Consequently the intermediate protocol functionality is formed by the Radio-Link-Control-layer (RLC-layer) having as main functions the segmentation and the ARQ.

Based on that exemplary system the segmentation and the ARQ as can be implemented as protocol functionality according to the invention as follows:

It is assumed an upper number of maintained flows in the system and each flow can be handled on its own. Furthermore, every PDU in the system has a unique identifier and a currently required segmentation size for each flow can be retrieved at any time and can be stored for each flow. A means which is independent with regard to the data flow is apt to dynamically change this value stored. Moreover each of the PDU's can arrive asynchronously at any time and be stored in a PDU-flow-queue, whereby for each established Transport Block Format (TBF) one PDU-flow-queue is provided.

Firstly, it is regarded the timing of the two schedulers prior to a data flow from the input of the PDU to the Physical-layer (PHY-layer).

Thus the specific system goes to a wait-state when a new radio bearer is established and the base transceiver station is initialised.

In the wait-state a MAC-interrupt is made when the PHY-layer requests the RLC-blocks from the MAC-scheduler. This occurs periodically and specifically in GPRS-systems approximately every 20ms. On this interrupt the following sequence could be performed:
1) Delivering of the RLC-blocks to the PHY-layer;
2) Going to the PDU-scheduler's function and running a *new_PDU* service;
3) Going to the *MAC*_*scheduler*;

With regard to the data flow from the input of a new PDU up to the delivering to the physical layer the following sequences are preferred:

### new_PDU:

At some time newly arrived PDU's have to be brought into the PDU-scheduling system. If the system allows for synchronisation mechanisms this can be done concurrently on PDU-arrival in a queue. A more general approach is to do this step always before a new MAC-scheduling cycle is started. As there is a need for synchronisation of flows that were inactive, this step is basically needed to perform this operation. Enabling to look at every flow marked as being inactive can be achieved by an explicit flag or simply by conduction its inactivity from having an empty queue. If there is a PDU for this queue, i.e. if there is a PDU arrived within the last MAC-scheduling interval, the respective queue is marked as being active and the first PDU is taken. For the synchronisation of flows a respective function *schedule_PDU* for this PDU could be called. The procedure is finished when all newly reactivated flows during the last MAC-scheduling interval have been synchronised again.

### schedule_PDU:

This is the actual QoS scheduling step. According to some scheduling discipline, for example according to the aforementioned documents of Hui Zhang and J. Cobb et al., the PDU receives a timestamp and is inserted into the service-list with regard to that priority.

### MAC_scheduler:

It has to be iterate over all resources involving in GPRS-systems up to 8 timeslots (TS) for one carrier whereby the following steps for each TS have to be performed:
1) Requesting of a read access to the service-list and accessing the first PDU-element;
2) Accessing the PDU-element and testing it for constraints. According to the exemplary embodiment the tested constraints are whether the ARQ-window allows for further transmissions and whether the time slot allocation for this PDU-flow allows for transmission on the currently examined TS;
3) In case of an unsuccessful test, skipping to the next PDU in the service-list and repeating step 2). If however the end of the list is reached, there are no schedulable PDU's available the system has to select a padding RLC-block and to proceed further with the below step 6);
4) In case of a successful test, performing a request for protocol functionality which would lead according to the exemplary embodiment to a segmentation of one RLC-block with a recent coding scheme, whereby this RLC-block receives its header and its sequence number. If however an ARQ is performed on this flow the RLC-block is given to ARQ to get buffered. The block creation is finished by a CRC-creation and the RLC-block is then returned to the MAC-scheduler;
5) If the segmentation of step 4) has received the last RLC-block of the PDU, i.e. the PDU is just receiving its finishing service the next PDU from this PDU-flow has to be scheduled. If a PDU is available in the flow-queue the first PDU is taken and the function *schedule_PDU* has to be called. If no PDU is available the flow is marked as being inactive;
6) The MAC-scheduler buffers the received block for transmission on the recent TS and the next TS gets scheduled starting at step 1) until the last TS is reached;
7) Going to the above-mentioned wait-state.

It has to be noted that step 5) of the *MAC_scheduler* cycle may also be performed at the end of that *MAC_scheduler* cycle. The difference is that with the proposed solution it is possible for a flow to schedule its new PDU with such high priority to get service within this MAC-interval on the subsequent timeslots. Furthermore, if the system finds itself anywhere else but in the wait-state when the MAC-interrupt arrives this indicates an overload situation.

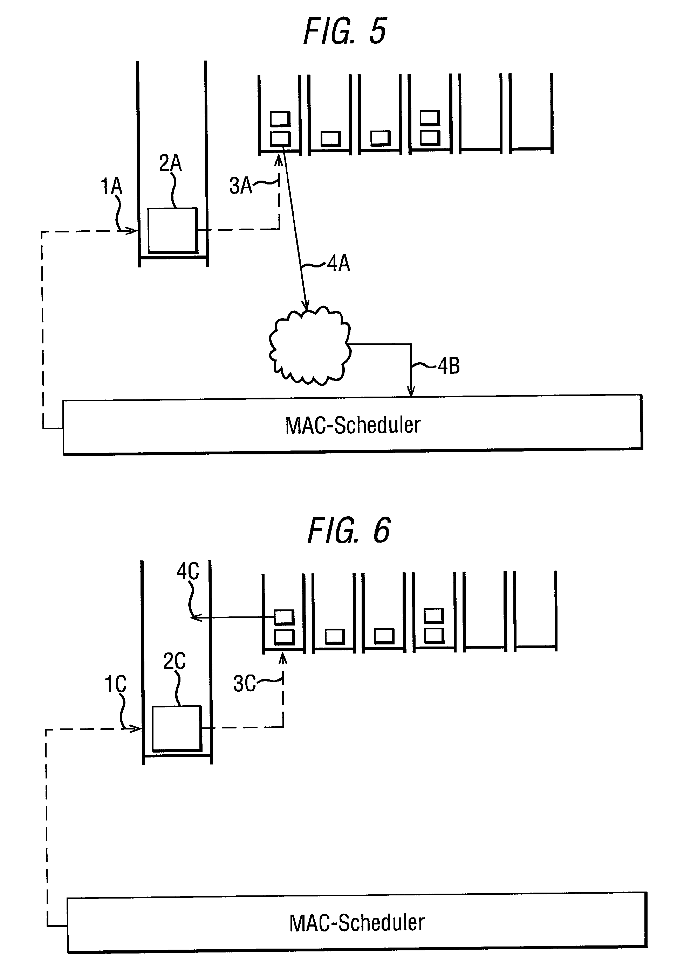

Fig. 5 and 6 illustrate further examples of a preferred embodiment, wherein Fig. 5 shows a service access from the MAC-scheduler and Fig. 6 shows the case where such access causing the removal of a PDU.

With regard to Fig. 5, the MAC-scheduler performs a read access to the service-list as indicated by reference sign 1A. It starts at the head of the service-list, i.e. accesses the list element which refers to the PDU with the most important priority. For simplicity reasons it is the first list element. In case the first one can not be served due to constraints or should not be served due to some optimising process there will be a search in the serving list for another PDU, which is not described here. Then the content of the service element is read, as indicated by reference sign 2A. The content is itself a reference to a flow-queue, where an associated PDU is stored. This reference is followed, as indicated by reference sign 3A, to access the according flow-queue and its first queuing element, the PDU. According to reference sign 4A, the MAC-scheduler's service is given to this PDU by reading parts of the PDU and delivering this to the intermediate protocol functionality. The output is delivered to the MAC-scheduler as indicated by reference sign 4B.

After the subsequent execution of the regular MAC-service to PDU according to Fig. 4 the MAC-scheduler will ultimately serve the last part of a PDU. This will be noticed by the MAC-scheduler and the following sequence will be initiated with regard to Fig. 6. The element in the serving list is referenced, as indicated by reference sign 1C. Its content is read and then the whole element in the serving list is removed, as indicated by reference sign 2C. The reference from this removed list element is followed to access the flow-queue and its first element, as indicated by reference sign 3C. The former successful completion of service to the PDU means that this PDU is fully processed and therefore is now removed as a whole PDU from the flow-queue. The next element in the flow-queue will reach the head of the queue. For this element the PDU-scheduling discipline algorithm is executed to derive a priority indicator. A new element for the serving-list is created while the position in the service list is determined by the priority indicator, as indicated by reference sign 4C. The content of this list element is the reference to the current queue, i.e. the new PDU at its head.

It is noted that the invention is described mainly with regard to a GPRS-system. However, the invention also may be applied within other multi-layered systems, for example to scheduling of data flows in the downlink shared channel of a UMTS-system.

## Claims

1. Method of providing quality of service in a packet switched network, especially a mobile radio system, based on at least two hierarchically structured protocol layers with respective schedulers, comprising the following steps:
providing by the scheduler (PDU-scheduler) of an upper layer protocol data units (PDUs) of an incoming data flow within a priority order of a definable data-flow-queue to be served by the scheduler (MAC-scheduler) of a lower layer for data transmission,
selecting a protocol data unit (PDU) on demand of the scheduler of the lower layer in dependence of the priority order and actual network constraints, and
serving the selected protocol data unit by the scheduler (MAC-scheduler) of the lower layer.

2. Method of claim 1, **characterized in that** the step of serving comprises the delivering of the selected protocol data unit to a protocol functionality means for performing data unit operations necessary for data transmission.

3. Method of claim 1 or 2, **characterized in that** the step of serving comprises the performing of a segmentation process on the data unit into data blocks.

4. Method of claim 3, **characterized by** attaching a header to the data block and/or performing an ARQ.

5. Method of any of claim 2 to 4, **characterized in that** the performing is finished by performing CRC.

6. Method of any of claims 1 to 5, **characterized by** subsequently buffering and/or delivering a data block for transmission by the scheduler of the lower layer.

7. Method of any of claims 1 to 6, **characterized in that** the steps of selecting and of serving are activated periodically and is performed for each timeslot of a data carrier frequency.

8. Method of any of claims 1 to 7, **characterized in that** the protocol data units of each incoming data flow having constraints and quality-of-service-attributes associated are queued in an respective flow-queue and the step of selecting is performed by comparing these constraints and/or attributes with the actual network constraints starting with the protocol data unit having the highest priority within a respective flow-queue.

9. Packet switched system based on at least two hierarchically structured protocol layers, comprising a transceiver having
- at least two schedulers each of which operates on an different protocol layer, wherein the scheduler (PDU-scheduler) of an upper layer provides protocol data units (PDU) of an incoming data flow within a data-flow-queue to be served by the scheduler (MAC-scheduler) of a lower layer for data transmission,
- means for linking the two schedulers in that the scheduler (MAC-scheduler) of the lower layer only is serving selectable protocol data units on demand of itself.

10. System of claim 9, **characterized in that** the means for linking comprises means for checking the properties of the protocol data units to be served with regard to actual system constraints.

11. System of claim 9 or 10, **characterized in that** the means for linking comprises means for processing protocol functionality required for data transmission.

12. System of claim 11, **characterized in that** the scheduler (MAC-scheduler) of the lower layer has a service access point for receiving the required protocol functionality.

13. System of claim 11 or 12, **characterized in that** the scheduler (MAC-scheduler) of the lower layer has a separate service access point for receiving asynchronous output of the means for processing protocol functionality.

14. System of any of claims 9 to 13, **characterized in that** the scheduler (PDU-scheduler) of the upper layer is apt to read and write in the data-flow-queue and the scheduler (MAC-scheduler) of the lower layer is apt to read in the data-flow-queue.

15. System of any claims 9 to 14, **characterized in that** the scheduler (PDU-scheduler) of the upper layer is operating with timestamps assigning every protocol data unit or assigning every data flow.

16. System of any claims 9 to 15, **characterized in that** the Network is a GPRS-System.

17. System of any claims 9 to 16, **characterized in that** the scheduler (PDU-scheduler) of the upper layer is operating on the Logigal-Link-Control-layer and the scheduler (MAC-scheduler) of the lower layer is operating on the Medium-Access-Control-layer.

18. Base transceiver station, **characterised by** a transceiver for using in a system of any of claims 9 to 17.

19. Mobil station, **characterized by** a transceiver for using in a system of any of claims 9 to 17

20. Implementation software for performing a method of any of claims 1 to 8, especially within a system of any of claims 9 to 17.
